## Europäisches Patentamt
## European Patent Office
## Office européen des brevets

(19)

(11) Publication number: **0 183 051**

**A1**

# (12) EUROPEAN PATENT APPLICATION

(21) Application number: **85113465.0**

(22) Date of filing: **23.10.85**

(51) Int. Cl.⁴: **B 60 K 17/04**
**B 60 K 17/34**

(30) Priority: **26.10.84 JP 224079/84**
**26.10.84 JP 224076/84**
**26.10.84 JP 224077/84**
**26.10.84 JP 224078/84**

(43) Date of publication of application:
**04.06.86 Bulletin 86/23**

(84) Designated Contracting States:
**DE FR GB**

(71) Applicant: **NISSAN MOTOR CO., LTD.**
**No.2, Takara-cho, Kanagawa-ku**
**Yokohama City(JP)**

(72) Inventor: **Takahashi, Kotei**
**4-2-4-508, Araisono**
**Sagamihara City(JP)**

(74) Representative: **Patentanwälte Grünecker, Kinkeldey,**
**Stockmair & Partner**
**Maximilianstrasse 58**
**D-8000 München 22(DE)**

(54) **Power transmission system for motor vehicles.**

(57) In a motor vehicle power transmission system of the kind wherein a longitudinal engine (40) and a final drive unit (30) are located adjacent each other, a final drive pinion shaft is so arranged as to offset from an output shaft of a transmission (10) in the lateral direction of the vehicle.

*FIG.2*

Croydon Printing Company Ltd.

# POWER TRANSMISSION SYSTEM FOR MOTOR VEHICLES

## BACKGROUND OF THE INVENTION

### 1. Field of the Invention

The present invention relates to power transmission systems for motor vehicles, particularly of the kind wherein a longitudinal engine and a final drive unit for driving a pair of road wheels of the vehicle are located adjacent each other, as for example a power transmission system for a front-engine front-wheel-drive vehicle.

### 2. Description of the Prior Art

A power transmission system of the above mentioned kind is disclosed, for example, in the Japanese Provisional Utility Model Publication No. 54-174235 and also shown in Fig. 16. As seen from the figure, this power transmission system includes an output shaft of a transmission and a final drive pinion shaft of a final drive unit which are axially aligned with each other.

With the prior art power transmission system of the above described kind, the final drive unit is necessarily disposed in space right under the engine, increasing design restrictions on the vehicle body such as restrictions on lowering the levels of the engine and the engine hood.

## SUMMARY OF THE INVENTION

In accordance with the present invention, there is provided a novel and improved power transmission system for a motor vehicle which comprises a longitudinal engine, a transmission installed in line with the engine and having an output shaft, and a final drive unit located adjacent the transmission and having a final drive pinion shaft drivingly connected to the output shaft of the transmission. The above structure may substantially follow the conventional fashion.

In accordance with the present invention, the final drive pinion shaft is so arranged as to offset from the output shaft of the transmission in the lateral direction of the vehicle.

The above structure is quite effective for overcoming the above noted disadvantages and shortcomings inherent in the prior art arrangement.

It is accordingly an object of the present invention to provide a novel and improved power transmission system for a motor vehicle which can eliminate or at least reduce the above noted design restrictions on the vehicle body such as the design restrictions on lowering the levels of the engine and the engine hood.

It is another object of the present invention to provide a novel and improved power transmission system of the above mentioned character which is effective for reducing the difference in level between the engine center and the differential center.

It is a further object of the present invention to provide a novel and improved power transmission system of the above mentioned character which enables the differential to be disposed closer to the engine with respect to a cross section of a vehicle as compared with those in the prior art arrangement.

It is a still further object of the present invention to provide a novel and improved power transmission system of the above mentioned character which is effective for making the final drive unit compact.

It is a yet further object of the present invention to provide a novel and improved power transmission system of the above described character which is effective of making easier the installation and assembly work of the power transmission system, particularly the final drive unit easier.

BRIEF DESCRIPTION OF THE DRAWINGS

The features and advantages of the power transmission system according to the present invention will become more clearly appreciated from the following description taken in conjunction with the accompanying drawings, in which:

Fig. 1 is a diagrammatic view of a power transmission system according to an embodiment of the present invention;

Fig. 2 is a diagrammatic plan view of a vehicle having installed thereon the power transmission system of Fig. 1;

Figs. 3 to 8 are views similar to Fig. 1 but showing variants of the power transmission system of Fig. 1;

Fig. 9 is a fragmentary cross sectional view of a power transmission system according to another embodiment of the present invention;

Fig. 10 is a fragmentary longitudinal sectional view of the power transmission system of Fig. 9;

Fig. 11 is a diagrammatic view of a vehicle having installed thereon the power transmission system of Fig. 9;

Figs. 12 to 15 are views similar to Fig. 11 but showing variants of the power transmission system of Fig. 11; and

Fig. 16 is a view similar to Fig. 1 but showing a prior art power transmission system.

DETAILED DESCRIPTION OF THE PREFERRED EMBODIMENTS

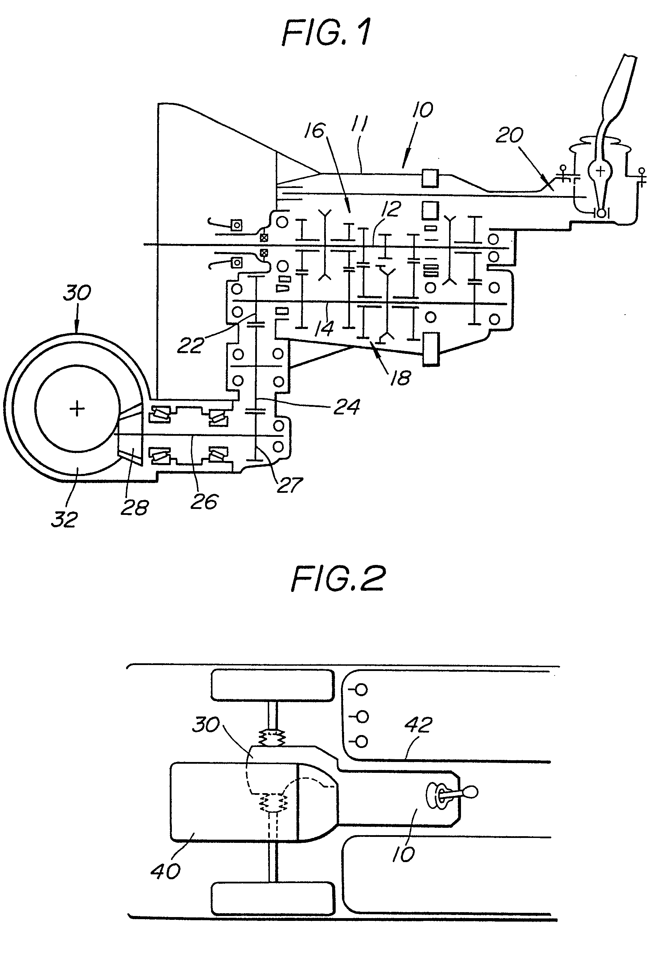

Referring first to Figs. 1 and 2, a transmission is generally indicated by the reference numeral 10 and includes a casing 11, a mainshaft 12 axially aligned with an output shaft (not shown) of an engine 40, a counter shaft 14 parallel with the mainshaft 12, a first group of gears 16 installed on the mainshaft 12, a second group of gears 18 installed on the counter shaft 14, and a gearshift linkage 20. The counter shaft 14 is adapted to serve as an output shaft of the transmission 10 and provided with an output gear 22. The output gear 22 meshes with an idler gear 24 which in turn meshes with a gear 27 integral with a final drive pinion shaft 26. The final drive pinion shaft 26 has at an end thereof an integral drive pinion 28 which meshes with a final gear or ring gear 32 of a final drive unit 30. In this connection, it is to be noted that the final drive pinion shaft 26 is so arranged as to offset from the counter shaft 14 when observed from above, i.e., with respect to a plan view thereof. In other words, the final drive pinion shaft 26 is spaced or offsets from the counter shaft 14 laterally of the vehicle.

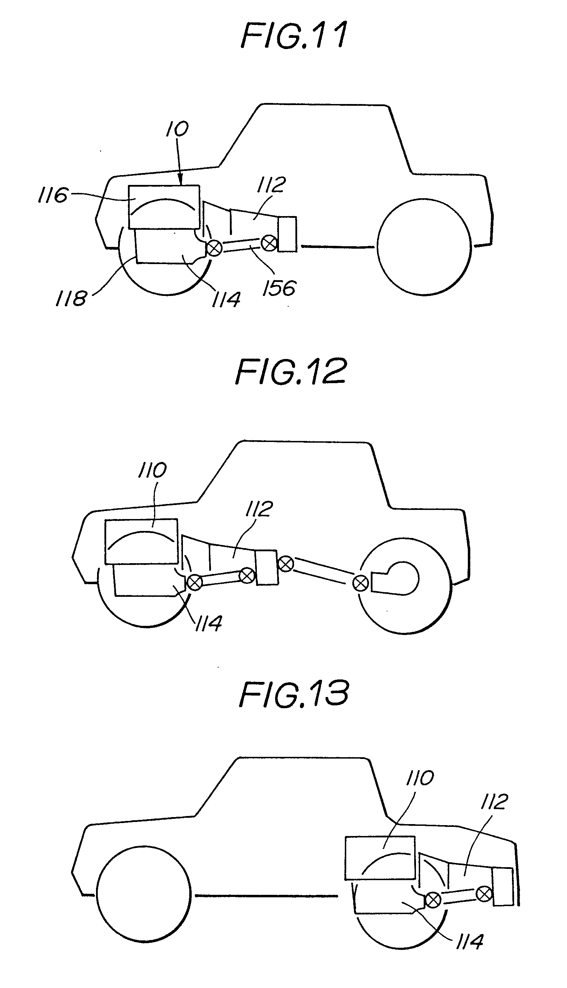

In Fig. 12, the transmission 10 is diagrammatically shown in its installed state. As shown, the transmission 10 is installed together with the engine 40 in such a manner that its longitudinal center axis coincides with the longitudinal center axis of the vehicle, while the final drive unit 30 is so arranged as to offset laterally from the longitudinal center axis of the vehicle. Indicated by the reference numeral 42 is a floor tunnel of the vehicle within which only the transmission part of the power transmission system is accommodated.

In operation, power of the engine 40 supplied to the mainshaft 12 of the transmission 10 is transferred through a selected set of the gears 16 and 18 to the counter shaft 14. By operating the gearshaft linkage 20, a desired speed gear ratio is selected out of five forward speed gear ratios and one reverse speed gear ratio. Power supplied to the counter shaft 14 is transferred through the output gear 22, idler gear 24 and the gear 27 to the final drive pinion shaft 26. The final drive pinion 28 is thus caused to rotate and drives the final gear 32 at the selected speed gear ratio.

From the foregoing, it is to be understood that the final drive unit 30, which is adapted to offset laterally form the longitudinal center axis of the vehicle as seen from Fig. 2, is disposed in space under the engine 40 off to the lateral direction of the vehicle. By this, the level of the engine 40 and therefore the engine hood can be lowered to eliminate or at least reduce the aforementioned design restrictions on the vehicle body.

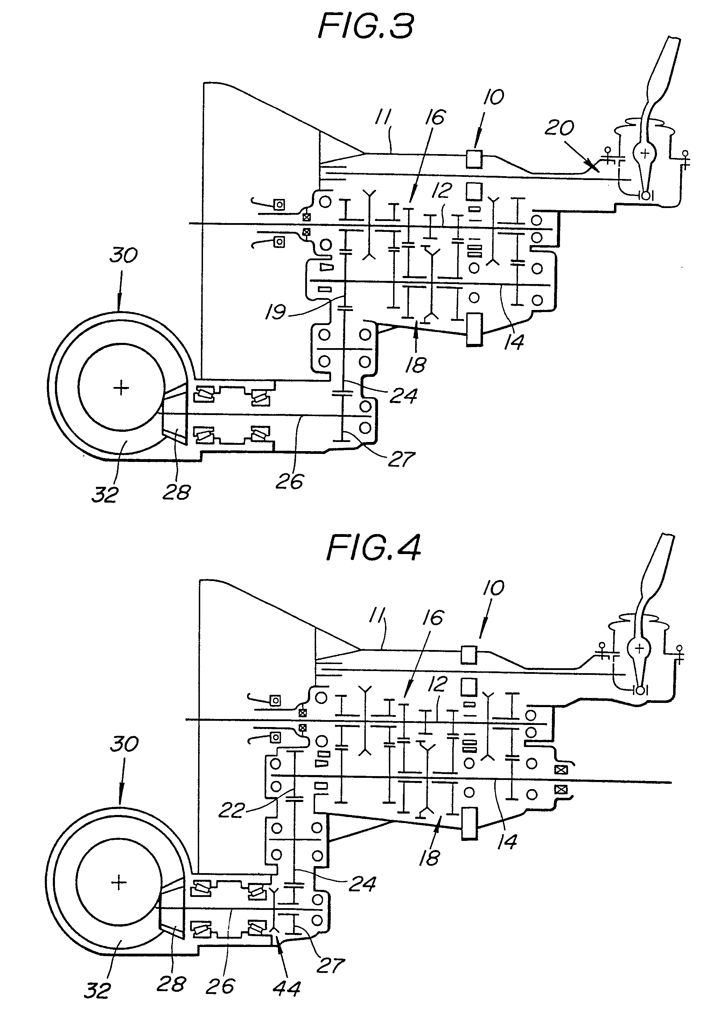

Figs. 3 to 8 show various variants of the power transmission system of Fig. 1. In the variant of Fig. 3, one 19 of the second group of gears 18 installed on the counter shaft 14 is meshed with the idler gear 24 to transfer engine power to the final drive pinion shaft 26. By this, one gear (output gear 22) can be dispensed with.

In the variant of Fig. 4 the counter shaft 14 is extended rearward to adapt the power transmission system for use in a four-wheel drive vehicle. Selection of a four-wheel drive or a rear-wheel drive is made by using a shifting mechanism 44.

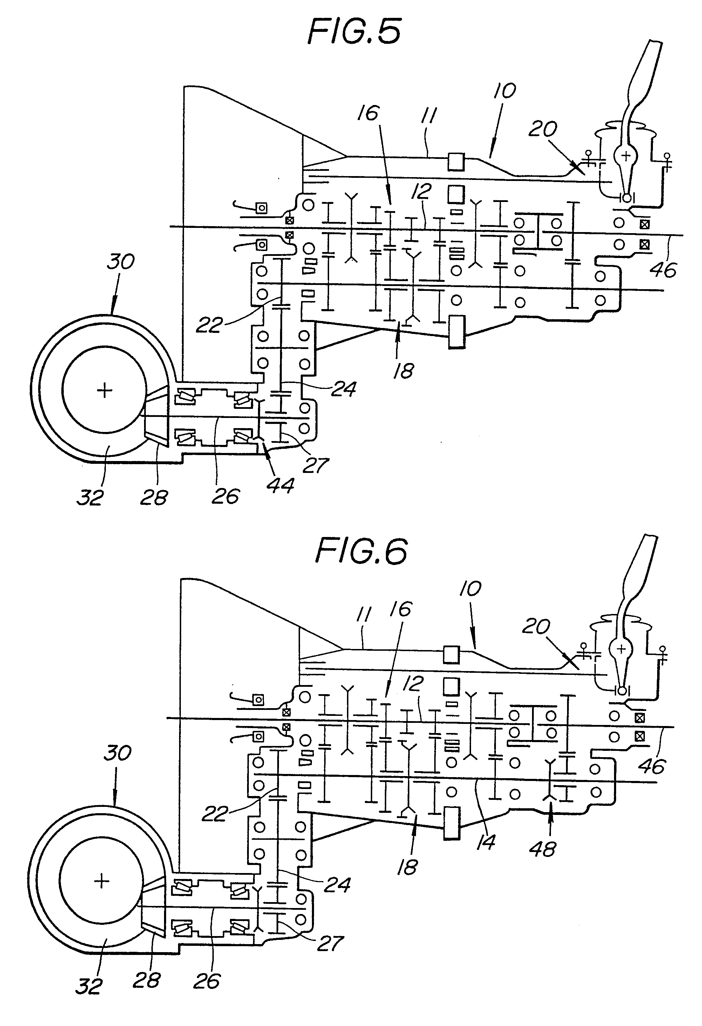

In the variant of Fig. 5, a drive shaft 46 for driving the rear wheels of the vehicle is axially aligned with the mainshaft 12. Selection of a four-wheel drive or a rear-wheel drive is made by using the shifting mechanism 44.

In the variant of Fig. 6, a shifting mechanism 48 is provided for selection of a four-wheel drive or a front-wheel drive.

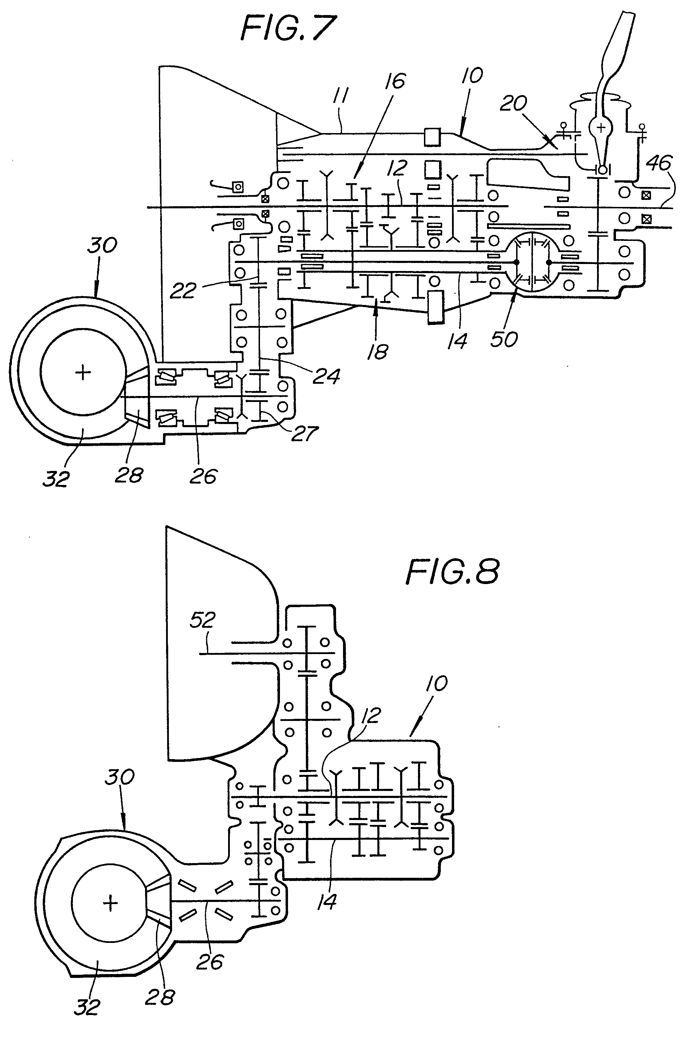

In the variant of Fig. 7, a center differential 50 is provided to attain a full-time four-wheel drive.

In the variant of Fig. 8, the mainshaft 12 offsets from the output shaft 52 of the engine 40 in addition to the offset of the counter shaft 14 from the mainshaft 12.

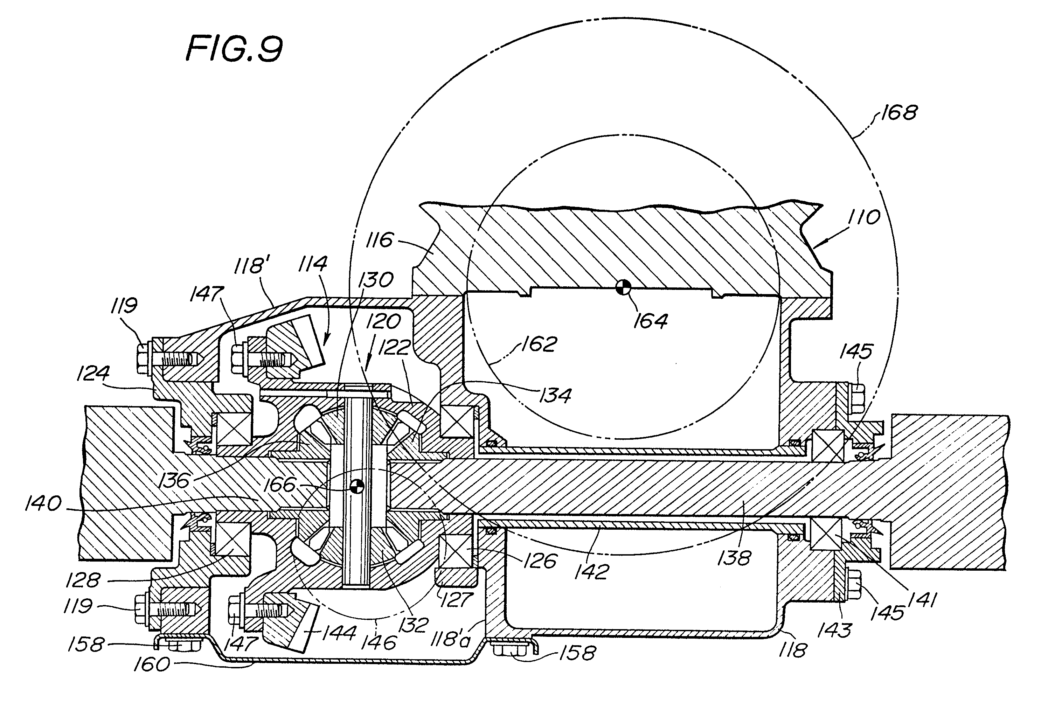

Referring to Figs. 9 to 11, another embodiment will be described.

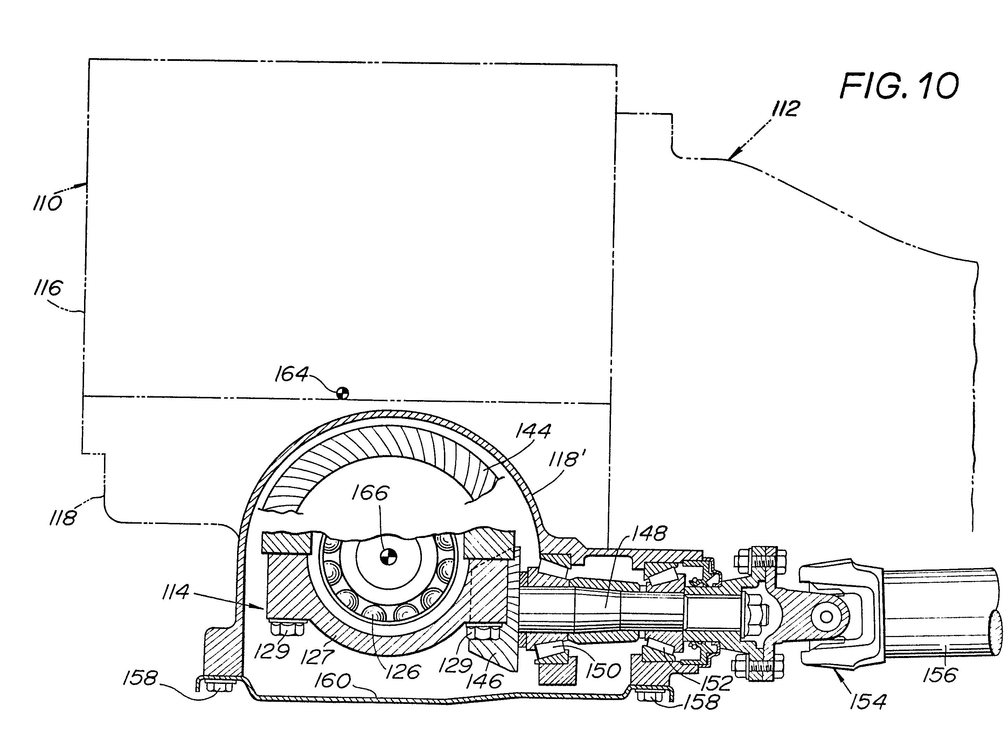

As shown in Fig. 11, a power transmission system for a longitudinal-front-engine front-wheel-drive vehicle consists of an engine 110, a transmission 112 and a final drive unit 114. The final drive unit 114 and an oil pan 118 attached to the lower end portion of a cylinder block 116 of the engine 110 are formed into an integral unit as shown in Figs. 9 and 10. More specifically, the final drive unit 114 includes a carrier 118' which is integral with the oil pan 118 and located at one lateral end of same. A differential case 122 of a differential 120 is disposed within the carrier 118' and rotatably supported on the laterally opposed ends of same by a pair of side bearings 126 and 128. One side bearing 126 located nearer to the oil pan 118 is attached to the carrier 118' by the use of a bearing cap 127, while the other side bearing 128 is fitted in a carrier lateral end cover 124 which is in turn secured with bolts 119 to the lateral end of the carrier 118' remoter from the oil pan 118. In order to hold the side bearing 128 axially in place, the carrier lateral end cover 124 and the differential case 122 are respectively formed with annular shoulders abutting upon the opposite axial ends of the side bearing 128. Within the differential case 122, a pair of pinion gears 130 and 132 and a pair of side gears 134 and 136 are retained. The side gears 134 and 136 are drivingly coupled with one ends of axle shafts 138 and 140 which in turn carry at the other ends thereof road wheels (not shown). In this connection, one axle shaft 138 projects from one lateral end of the carrier 118', which lateral end also forms one lateral end of the oil pan 118, and passes through a pipe 142 which transversely extends through the inside of the oil pan 118 and is sealingly secured at the opposite axial ends thereof to the opposite lateral ends of the oil pan 118. The axle shaft 138 then projects from the oil pan 118 and extends toward corresponding one of the road wheels. The axle shaft 138 is rotatably supported on the oil pan 118 by means of a bearing 141. At the place next to the bearing 141, there is provided a cover 143 which is attached to the oil pan 118 with bolts 145. The other axle shaft 140 projects from the other lateral end of the carrier 118' through the lateral

end cover 124 and extends toward corresponding one of the road wheels. A final gear or ring gear 144 is secured with bolts 147 to such a portion of the differential case 122 that is located adjacent the axial end of the differential case 122 remoter from the engine 110 and the oil pan 118. The final gear 144 meshes with a final drive pinion 146 integral with a final drive pinion shaft 148. The final drive pinion shaft 148 is rotatably supported by a pair of bearings 150 and 152 on the carrier 118' and drivingly connected through a universal joint 154 to a forward end of a propeller shaft 156 which is disposed to extend longitudinally of the vehicle. The propeller shaft 156 is in turn drivingly connected to an output shaft or element (not shown) of the transmission 122. The carrier 118' has at the lower end wall thereof an opening 118'a through which the differential 120 is inserted for installation therein. After installation of the differential 120 in the carrier 118', the opening 118'a is closed by a carrier lower end cover 160 which is secured with bolts 158 to the carrier 118'.

In operation, power of the engine 110 is supplied to the transmission 12 and then transferred from the output element of the transmission 112 to the propeller shaft 156. The propeller shaft 156 thus drives the final drive pinion shaft 148 and the final drive pinion 146 integral therewith, whereby the final gear 144 and the differential case 112 secured thereto are caused to rotate and drive the axle shafts 138 and 140 by the action of the differential mechanism 120. The vehicle is thus driven to run.

In the above, it is to be noted that the pipe 142 is disposed as high as possible so long as it does not interfere or contact with the circle 162 which is traced by the outermost part of the rotating crankshaft (not shown), whereby to reduce the difference in level between the engine center (cranshaft center axis) 164 and the differential center (point at which side gear and pinion gear axes intersect) 166 as much as possible.

It is further to be noted that the final gear 144 is disposed adjacent the lateral end of the differential 120 remoter from the engine 110, whereby the differential 120 can be disposed closer to the engine center 164 with respect to a corss section of the vehicle such as shown in Fig. 9.

It is still further to be noted that the final drive pinion shaft 148 and the final drive pinion 146 are disposed lower than the differential center 166 so as not to interfere with the circle which is traced by the outermost rotating part of the clutch (not shown) disposed within the transmission 112.

It is yet further to be noted that the side bearing 128 is attached to the carrier 118' by the use of the carrier lateral end cover 124. This is quite effective for attaining a compact final drive unit and superior in this respect to the prior art arrangement in which a corresponding side bearing is attached to a carrier by the use of a bearing cap.

It is yet further to be noted that the bearing cap 127 is adapted to be bolted to the carrier 118' by access thereto through the opening 118'a formed in the lower end wall of the carrier 118'. This is quite effective for making easier the assembly work of the final drive unit even when the carrier 118' is formed integral with the oil pan 118 as in the case of the illustrated embodiment.

In the above manner, by disposing the differential 120 as close as possible to the engine center 164, the length of the axle shaft 140 can be increased. In this connection, the corresponding axle shaft in the prior art arrangement can not be lengthened as desired due to some design restrictions which are to be solved by the above arrangement of the present invention. The carrier lower end cover 160 for closing the opening 118'a of the carrier 118' is made of sheet steel or the like and not of cast iron or the like that is likely to be damaged.

Upon installation and removal of the final drive pinion 146, the bearing cap 127 and the side bearing 126 are first removed. The bearing cap 127 and the side bearing 126 can be easily removed and installed through the opening 118'a which is opened by removal of the lower end cover 160. The final drive pinion 148 is arranged so that it is capable of being installed and removed through an opening (not shown) formed in a vertical wall of the carrier 118' only when the bearing cap 127 is removed from the carrier 118', whereby it becomes possible to arrange the bearing cap 127 and the side bearing 126 closer to the differential center 166 as compared with those in the prior art arrangement. This makes it possible to further increase the length of the axle shaft 140 as well as attain a compact final drive unit.

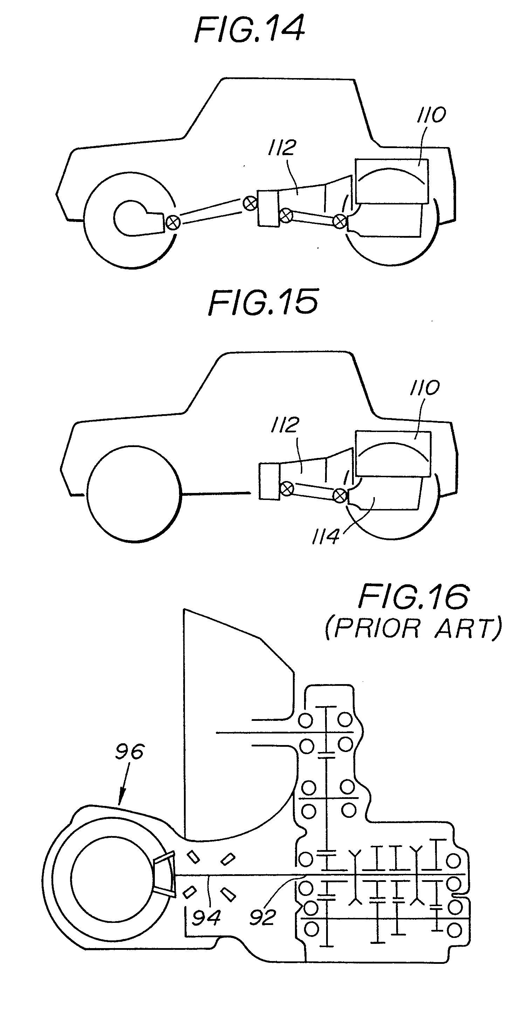

While the oil pan 118 and the carrier 118' which are integral with each other have been described and shown in the above, this is not limitative but they may be formed into independent parts and joined together with bolts. Further, while the power transmission system thus far described and shown according to another embodiment of the present invention is of the kind for use in a front-engine front-wheel-drive vehicle, it may otherwise be used in a front-engine four-wheel-drive vehicle as shown in Fig. 12, a midship-engine rear-wheel-drive vehicle as shown in Fig. 13, a rear-engine four-wheel-drive vehicle as shown in Fig. 14 and a rear-engine rear-wheel-drive vehicle as shown in Fig. 15.

The embodiment of Figs. 9 to 15 can produce substantially the same effect as the previous embodiment of Figs. 1 to 8. In addition, this embodiment can reduce the difference in level between the engine and the final drive unit and is therefore further effective for lowering the levels of the engine and the engine hood. Furthermore, this embodiment makes it possible to arrange the differential and therefore the final drive unit closer to the longitudinal center axis of the vehicle and is therefore effective for attaining a compact power transmission system. Still furthermore, this embodiment is effective for attaining an easy assembly and installation work of a power transmission system.

WHAT IS CLAIMED IS:

1.    A power transmission system for a motor vehicle comprising:

    a longitudinal engine;

    a transmission installed in line with said engine and having an output shaft; and

    a final drive unit located adjacent said transmission and having a final drive pinion shaft drivingly connected to said outut shaft of said transmission;

    in which said final drive pinion shaft offsets from said output shaft of said transmission in the lateral direction of the vehicle.

2.    A power transmission system as set forth in claim 1, in which an idler gear is provided between said output shaft and said final drive pinion shaft to drivingly interconnect the same.

3.    A power transmission system as set forth in claim 1, in which said transmission has an input shaft axially aligned with an output shaft of said engine.

4.    A power transmission system as set forth in claim 1, in which said transmission has an output shaft offsetting from an output shaft of said engine in the lateral direction of the vehicle and drivingly connected to same by an idler gear.

5.    A power transmission system as set forth in claim 1, in which an oil pan of said engine and said final drive unit are arranged side by side in the lateral direction of the vehicle and formed into an integral unit, said final drive unit and said transmission being drivingly connected to each other by means of a propeller shaft having a universal joint, said final drive unit having a ring gear adjacent a lateral end of a differential remoter from said engine.

6.   A power transmission system as set forth in claim 5, in which said final drive unit has a carrier integral with said oil pan.

7.   A power transmission system as set forth in claim 6, in which said final drive unit has a pair of axle shafts one of which passes through a pipe which transversely extends through said oil pan.

8.   A power transmission system as set forth in claim 7, in which said carrier has at the lateral end thereof remoter from said oil pan a first opening and at a lower end thereof a second opening, and in which said final drive unit has a differential case and a pair of side bearings through which said differential case is rotatably supported on said carrier, one of said side bearings being attached to said carrier by a lateral end cover which is attached to said lateral end of said carrier to close said first opening while the other side bearing being attached to a lateral end of said carrier adjacent said oil pan by means of a bearing cap which is capable of being installed and removed through said second opening.

9.   A power transmission system as set forth in claim 8, the other of said axle shafts extends through said lateral end cover.

10. A power transmission system as set forth in claim 9, in which said final drive pinion shaft has at one end thereof a final drive pinion and is capable of being installed and removed through a third opening formed in said carrier only when said bearing cap is removed from said carrier.

## FIG.1

## FIG.2

2/8

FIG.3

0183051

FIG.4

## FIG.5

## FIG.6

# FIG.7

# FIG.8

FIG.9

FIG. 10

6/8

0183051

## FIG.11

## FIG.12

## FIG.13

## FIG.14

## FIG.15

## FIG.16
### (PRIOR ART)

European Patent
Office

# EUROPEAN SEARCH REPORT

EP 85 11 3465

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | DE-A-2 139 340 (PORSCHE) <br><br> * complete document * | 1,3,5, 6 | B 60 K 17/04 <br> B 60 K 17/34 |
| A | | 7-9 | |
| | --- | | |
| X | DE-U-7 431 662 (B.M.W.) <br> * claims 1-6; figure * | 1,3 | |
| A | | 5-9 | |
| | --- | | |
| X | GB-A- 912 675 (AUSTIN) <br><br> * page 1, lines 55-63; page 2, lines 13-29; figure * | 1,3,5-9 | |
| | --- | | **TECHNICAL FIELDS SEARCHED (Int. Cl 4)** |
| X | DE-A-2 056 802 (AUDI NSU AUTO UNION) <br> * figures 1-3 * | 1,3 | B 60 K 17/00 <br> B 60 K 5/00 <br> F 16 H 57/00 |
| | --- | | |
| X | FR-A-2 520 079 (RENAULT) <br> * figure 3 * | 1,3 | |
| | --- | | |
| A | FR-A-2 410 767 (TOYOTA) <br> * page 6, line 33 - page 7, line 8; figure 2 * | 1,4 | |
| | ----- | | |

The present search report has been drawn up for all claims

| Place of search | Date of completion of the search | Examiner |
|---|---|---|
| BERLIN | -15-01-1986 | KRIEGER P O |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82